# DEMANDE DE BREVET EUROPEEN

(11) **EP 0 809 408 A1**
(43) Date de publication de la demande: **26.11.1997**
(21) Numéro de dépôt: 97401129.8
(22) Date de dépôt: 23.05.1997
(51) Int. Cl.: H04N 9/75, H04N 5/272

(54) **Caméra à effets spéciaux**

(30) Priorité: 24.05.1996 FR 9606506
(71) Demandeur: THOMSON multimedia, 92648 Boulogne Cédex (FR)
(72) Inventeur: Blondel, Laurent, 92648 Boulogne Cedex (FR); Auffret, Eric, 92648 Boulogne Cedex (FR); Bizos, Laurent, 92648 Boulogne Cedex (FR)
(74) Mandataire: Ruellan-Lemonnier, Brigitte

(57) **Abrégé**

La présente invention concerne une caméra (1) comprenant des moyens (3, 7, 9) permettant de générer un signal de clé de découpe (k) d'un sujet évoluant devant un fond à partir de fréquences non visibles issues du fond.

Ces moyens sont constitués d'un séparateur optique (3), d'un détecteur (7) et d'un circuit de traitement (9).

Le séparateur optique (3) permet de séparer le faisceau qui représente le sujet et le fond en quatre faisceaux distincts parmi lesquels se trouvent trois faisceaux de couleur (FR, FV, FB) et un quatrième faisceau constitué des fréquences non visibles issues du fond. Le détecteur (7) permet de transformer en signal électrique (PIR) l'énergie contenue dans le quatrième faisceau et le circuit de traitement (9) permet de générer le signal de clé (k) à partir du signal électrique issu de la détection du faisceau de fréquences non visibles.

L'invention s'applique à la découpe de sujets évoluant devant des fonds colorés de façon à placer ces sujets devant de nouveaux fonds colorés.

## Description

La présente invention concerne la découpe d'un sujet évoluant devant un fond de façon à pouvoir incruster ce sujet sur un nouveau fond.

Comme cela est connu de l'homme de l'art, la découpe d'un sujet évoluant devant un fond s'effectue à l'aide d'un signal communément appelé clé de découpe.

La clé de découpe permet la distinction entre le fond devant lequel évolue le sujet et le sujet lui-même.

L'invention propose une nouvelle définition de la clé de découpe et, partant, un nouveau dispositif permettant d'obtenir une clé de découpe selon cette nouvelle définition.

De façon générale, l'invention concerne tout type d'appareil électronique utilisant un nouveau dispositif tel que celui mentionné ci-dessus.

Selon l'art antérieur, il est nécessaire de calculer la clé de découpe. Il faut alors définir, dans l'espace des couleurs, un ou plusieurs volumes représentant le fond devant lequel évolue le sujet de façon à pouvoir extraire le sujet du fond.

Le calcul de la clé nécessite de séparer l'espace des couleurs en trois zones : une première zone définissant un volume représentant le fond, une deuxième zone définissant un volume représentant le sujet et une troisième zone définissant une zone de transition entre le fond et le sujet.

Comme cela est connu de l'homme de l'art, la première zone définissant le volume représentant le fond est le plus souvent constituée d'une couleur bleue fortement saturée et présentant une très grande uniformité apparente. Il s'ensuit que la bande de fréquences visibles émises par le fond se doit d'être très étroite. Cette contrainte de saturation et d'homogénéité du fond devant lequel évolue le sujet implique d'éclairer ce fond et, partant le sujet, avec beaucoup de lumière. Il résulte de cet éclairage important de réelles nuisances quant au réalisme visuel et à la qualité des images générées.

II est ainsi impossible, par exemple, d'incruster un sujet faiblement éclairé en lumière visible.

L'invention ne présente pas cet inconvénient.

L'invention concerne une caméra permettant de générer un signal vidéo représentant un sujet évoluant devant un fond. La caméra comprend des moyens pour générer un signal de clé de découpe du sujet à partir de fréquences non visibles issues du fond.

Avantageusement, le signal de découpe est alors directement issu de la caméra.

L'invention concerne également un dispositif permettant de générer un signal de découpe d'un sujet évoluant devant un fond . Le dispositif comprend des moyens pour générer un signal vidéo représentant le sujet évoluant devant le fond et des moyens pour détecter le fond à l'aide de fréquences non visibles émises par le fond.

L'invention concerne aussi un système permettant l'incrustation, sur un deuxième fond, d'un sujet évoluant devant un premier fond. Le système comprend une caméra telle que celle selon l'invention de façon à générer un signal vidéo représentant le sujet évoluant devant le premier fond et un signal de clé de découpe à partir de fréquences non visibles issues du premier fond, un dispositif générant le signal vidéo représentant le deuxième fond, et un mélangeur permettant de générer l'image représentant le sujet incrusté sur le deuxième fond à partir du signal vidéo représentant le sujet évoluant devant le premier fond, du signal de clé de découpe, et du signal vidéo représentant le deuxième fond.

L'invention concerne encore un système permettant l'incrustation, sur un deuxième fond, d'un sujet évoluant devant un premier fond, caractérisé en ce qu'il comprend :
- une caméra telle que celle selon l'invention de façon à générer un signal vidéo représentant le sujet évoluant devant le premier fond et un signal de clé de découpe à partir de fréquences non visibles issues du premier fond, la caméra comprenant un circuit de multiplexage du signal vidéo et du signal de clé de découpe de façon à créer un signal multiplexé issu de la caméra ;
- une unité de contrôle comprenant un démultiplexeur ;
- une ligne de transmission permettant d'acheminer le signal multiplexé vers le démultiplexeur afin de restituer, d'une part, le signal vidéo représentant le sujet évoluant devant le premier fond et, d'autre part, le signal de clé de découpe ;
- un dispositif générant le signal vidéo représentant le deuxième fond ;
- un mélangeur permettant de générer l'image représentant le sujet incrusté sur le deuxième fond à partir du signal vidéo restitué issu de l'unité de contrôle , du signal de clé restitué issu de l'unité de contrôle, et du signal représentant le deuxième fond.

Comme cela a été mentionné ci-dessus, un avantage de l'invention est de permettre l'incrustation de sujets faiblement éclairés en lumière visible.

D'autres caractéristiques et avantages de l'invention apparaîtront à la lecture d'un mode de réalisation préférentiel fait avec référence aux figures ci-annexées, parmi lesquelles :
- la figure 1 représente le schéma de principe d'un premier mode de réalisation d'une caméra selon l'invention ;
- la figure 2 représente le schéma de principe d'un deuxième mode de réalisation d'une caméra selon l'invention ;
- la figure 3 représente le schéma de principe d'un troisième mode de réalisation d'une caméra selon l'invention ;
- la figure 4 représente le schéma de principe d'un quatrième mode de réalisation d'une caméra selon l'invention ;
- la figure 5 représente le schéma de principe d'une caméra issue d'un perfectionnement de la caméra représentée en figure 2 ou 4 ;
- la figure 6 représente le schéma de principe d'une unité de contrôle permettant de traiter le signal vidéo issu d'une caméra telle que celle représentée en figure 5 ;
- la figure 7 représente un système complet d'incrustation de sujet utilisant une caméra telle que celle représentée en figure 5 et une unité de contrôle telle que celle représentée en figure 6.

Sur toutes les figures, les mêmes repères désignent les mêmes éléments.

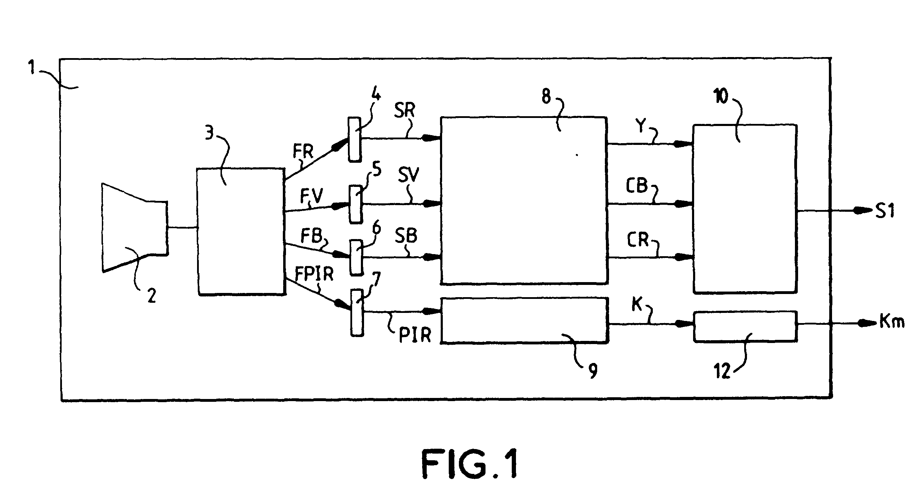

La figure 1 représente le schéma de principe d'une caméra selon l'invention.

La caméra 1 comprend un objectif 2, un séparateur optique 3, des senseurs 4, 5, 6, 7, des circuits de traitement 8 et 9, un dispositif 10 de multiplexage et de modulation et un dispositif 12 de modulation.

L'objectif 2 réalise la formation d'une image dans son plan focal. L'image ainsi formée est dirigée vers le séparateur optique 3 qui a pour fonction de séparer le faisceau qui représente le sujet et le fond devant lequel évolue le sujet en quatre faisceaux distincts : un faisceau rouge FR, un faisceau vert FV, un faisceau bleu FB et un faisceau de fréquences non visibles FPIR préférentiellement situées dans la bande de fréquences proche infrarouge. A cette fin, le séparateur optique 3 est constitué d'une série de dioptres plans et de filtes. Selon le mode de réalisation préférentiel, un filtre ne laissant passer que les fréquences visibles et les fréquences situées dans la proche infra-rouge est placé en amont du séparateur 3. Selon d'autres modes de réalisation, aucun filtre n'est placé en amont du séparateur 3.

Le faisceau qui représente le sujet et le fond devant lequel évolue le sujet est obtenu par l'éclairage simultané de la scène filmée à l'aide de deux séries de lampes : une première série de lampes émettant dans le visible et non dans le proche infrarouge et une deuxième série de lampes n'émettant que dans le proche infrarouge. Le fond devant lequel est placé le sujet est alors choisi de façon à réfléchir ou à diffuser tout ou partie des fréquences émises par la deuxième série de lampes, c'est-à-dire de façon à réfléchir ou à diffuser des fréquences situées dans le proche infrarouge.

Avantageusement, l'image visible se trouve libérée des contraintes techniques qui existent dans les procédés de découpe de l'art antérieur. En particulier, différentes couleurs ou combinaisons de couleurs visibles peuvent composer le fond devant lequel évolue le sujet.

Afin de séparer les différentes fréquences collectées par l'objectif 2, le séparateur optique 3 est équipé d'une série de dioptres plans et de filtres. Dans le plan focal de chacun des faisceaux FR, FV, FB et FPIR est situé un dispositif permettant de transformer l'énergie lumineuse qu'il reçoit en signal électrique. De façon préférentielle, les quatre dispositifs 4, 5, 6, 7 permettant de transformer l'énergie lumineuse en signal électrique sont des dispositifs à transfert de charges communément appelés CCD, de l'anglais "Charge Coupled Devices". Les faisceaux FR, FV, FB et FPIR sont alors respectivement transformés en signaux électriques SR, SV, SB et PIR.

Avantageusement, le dispositif à transfert de charges 7 utilisé pour recueillir les fréquences situées dans le proche infrarouge peut être identique aux dispositifs à transfert de charges communément utilisés pour recueillir les fréquences visibles. En effet, il est apparu que les dispositifs à transfert de charges de technologie Silicium, couramment utilisés pour la détection des fréquences visibles, présentent dans le proche infrarouge un niveau de détection non négligeable et suffisant pour créer un signal utile, tel que le signal de découpe selon l'invention.

Les signaux électriques SR, SV, SB issus des dispositifs à transfert de charges respectifs 4, 5, 6 sont envoyés dans le circuit de traitement 8 et le signal électrique PIR est envoyé dans le circuit de traitement 9.

Le circuit de traitement 8 traite les signaux électriques qu'il reçoit de façon connue en soi. Ainsi, le circuit de traitement 8 permet-il de convertir les signaux électriques SR, SV, SB en signaux numériques de luminance Y, de différence de couleur bleue CB et de différence de couleur rouge CR au format 4:2:2 et codés, préférentiellement, sur 10 bits.

De façon connue en soi, les signaux Y, CB, CR sont envoyés dans un dispositif 10 de multiplexage et de modulation de façon à générer un signal de sortie S1 multiplexé et modulé constitué des informations de luminance Y, de différence de couleur bleue CB et de différence de couleur rouge CR.

Le circuit de traitement 9 permet de générer le signal de clé K à partir du signal électrique PIR. Dans un premier temps, le signal électrique PIR est échantillonné à une fréquence d'échantillonnage préférentiellement égale à la fréquence d'échantillonnage du signal de luminance. Dans un deuxième temps, le niveau du signal électrique ainsi échantillonné est ajusté de façon à assurer la détection du fond devant lequel évolue le sujet. A cette fin, le niveau du signal électrique échantillonné est comparé, après avoir été éventuellement amplifié si cela est nécessaire, à une valeur de seuil. Cette comparaison peut s'effectuer par tout moyen connu tel que, par exemple, un comparateur à niveau TTL. Quand le niveau du signal électrique échantillonné est inférieur à la valeur de seuil, le signal issu du comparateur prend une première valeur signifiant que le fond n'est pas détecté. Quand le niveau du signal électrique échantillonné est supérieur à la valeur de seuil, le signal issu du comparateur prend une deuxième valeur signifiant que le fond est détecté.

Le signal binaire issu du comparateur constitue le signal de clé K. Selon un perfectionnement de l'invention, le circuit de traitement 9 comprend un convertisseur analogique-numérique permettant de numériser le signal binaire issu du comparateur. Le signal de clé K est alors constitué d'une information numérique codée, par exemple, sur 10 bits. Il est alors possible d'effectuer sur le signal de clé ainsi numérisé des traitements permettant d'améliorer la définition de la zone de transition.

Avantageusement, le signal de clé K n'est pas issu d'une étape de calcul comme c'est le cas dans les dispositifs de l'art antérieur. Le signal de clé selon l'invention est un signal issu directement de la détection de l'image que constitue le sujet évoluant devant le fond. Il s'ensuit une nette amélioration des détails du contour de découpe.

Le signal de clé K issu du dispositif de traitement 9 est envoyé dans un dispositif de modulation 12 afin de constituer le signal de clé modulé Km destiné à être transmis.

Selon le mode de réalisation décrit ci-dessus, le circuit de traitement 8 permet de numériser les signaux Y, CB, CR. L'invention concerne cependant le cas où les signaux de couleurs Y, CB, CR ne sont pas numérisés.

Quand la caméra se déplace devant l'image constituée par le sujet évoluant devant le fond, il est souvent utile de repérer de combien s'est déplacée la caméra. Selon l'art antérieur, des motifs ayant pour couleur des nuances de la couleur du fond sont disposés sur le fond afin de servir de repères au déplacement de la caméra. Comme cela a été mentionné précédemment, la clé de découpe, selon l'art antérieur, est calculée à partir de la couleur visible du fond, laquelle couleur doit être saturée. Il s'ensuit que les nuances de couleurs des différents motifs ne peuvent pas trop se différencier les unes des autres.

Avantageusement, selon l'invention, la clé de découpe est fournie par un signal de fréquence non-visible réfléchi ou diffusé par le fond. Les motifs permettant de servir de repères au déplacement de la caméra peuvent alors être réalisés à partir de fréquences situées dans le proche infrarouge et n'ayant pas à être très proches les unes des autres. Il est alors possible de générer des signaux plus faciles à discerner et à traiter.

Un autre avantage de l'invention consiste à pouvoir équiper le sujet à découper de marqueurs émettant dans la gamme de fréquences de la voie proche infrarouge. Il est alors possible de détecter par traitement d'image ces marqueurs afin d'utiliser leur forme, leur position ou toute autre caractéristique, pour la création d'effets spéciaux tels que, par exemple, la manipulation d'objets de synthèse ou encore le pilotage d'un volet de mélange.

Selon le mode de réalisation décrit en figure 1, le signal vidéo S1 issu du dispositif 12 de multiplexage et de modulation et le signal de clé modulé Km sortent de la caméra sur deux sorties séparées.

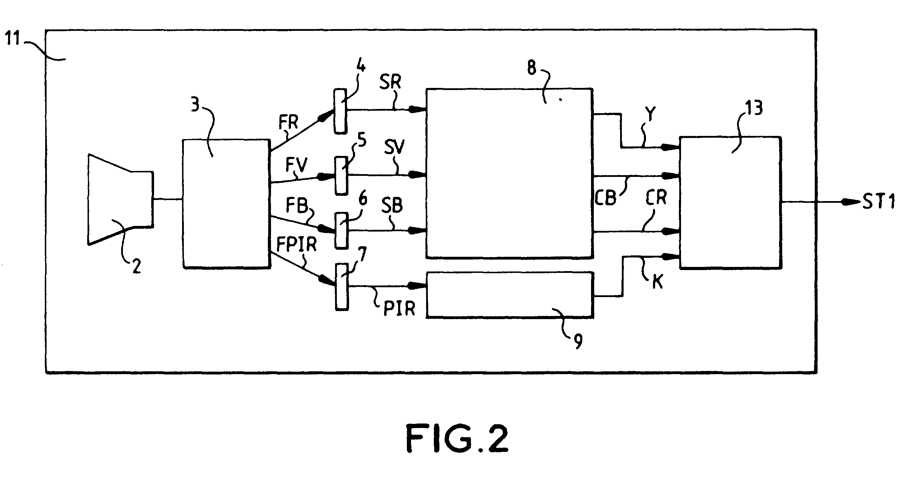

La figure 2 décrit un deuxième mode de réalisation de l'invention pour lequel le signal vidéo S1 et le signal de clé modulé Km sortent de la caméra sur une seule sortie de façon à constituer le signal ST1. La caméra 11 comprend un objectif 2, un séparateur optique 3, quatre dispositifs 4, 5, 6, 7 permettant de transformer l'énergie lumineuse en signal électrique et deux circuits de traitement 8 et 9.

Selon le mode de réalisation de la figure 2, le signal de luminance Y, le signal de différence de couleur bleue CB, le signal de différence de couleur rouge CR et le signal de clé K sont envoyés dans un dispositif de multiplexage et de modulation 13, permettant de générer un signal de sortie ST1.

Dans le cas où les signaux Y, CB, CR et K sont codés sur 10 bits, le signal ST1 est alors constitué d'un signal au format 4:2:2:4 dont chaque composante est codée sur 10 bits.

Le signal ST1 issu de la caméra peut alors être transmis, par exemple, vers un studio de télévision ou un car de reportages par l'intermédiaire d'un câble unique.

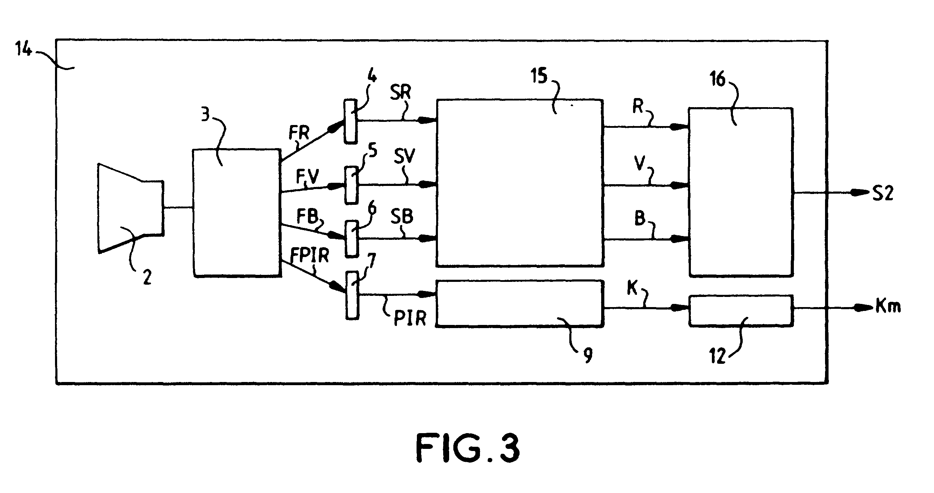

La figure 3 représente le schéma de principe d'un troisième mode de réalisation d'une caméra selon l'invention.

La caméra 14 comprend un objectif 2, un séparateur optique 3 et quatre senseurs 4, 5, 6, 7 tels que ceux représentés aux figures 1 et 2.

Les signaux électriques SR, SV, SB issus des dispositifs à transfert de charges respectifs 4, 5, 6 sont envoyés dans le circuit de traitement 15 et le signal électrique PIR issu du dispositif à transfert de charges 7 est envoyé dans le circuit de traitement 9.

Le circuit de traitement 15 permet d'échantillonner et de numériser les signaux SR, SV, SB de façon à constituer des signaux de couleurs R, V, B au format 4:4:4, préférentiellement codés sur 10 bits.

Le circuit de traitement 9 est le même que le circuit de traitement de même référence décrit en figure 1. Préférentiellement, la fréquence d'échantillonnage du signal PIR est égale à la fréquence d'échantillonnage des signaux SR, SV, SB.

De façon connue en soi, un dispositif 16 de multiplexage et de modulation permet de générer un signal S2 constitué des informations de couleurs multiplexées et modulées. Le signal de clé K issu du circuit de traitement 9 est modulé par le modulateur 12 de façon à constituer le signal de clé modulé Km.

Selon le mode de réalisation décrit ci-dessus, le circuit de traitement 15 permet de numériser les signaux de couleur R, V, B. L'invention concerne également le cas où les signaux de couleur R, V, B ne sont pas numérisés.

Selon le mode de réalisation de la figure 3, le signal vidéo S2 et le signal de clé modulé Km sortent de la caméra sur deux sorties séparées.

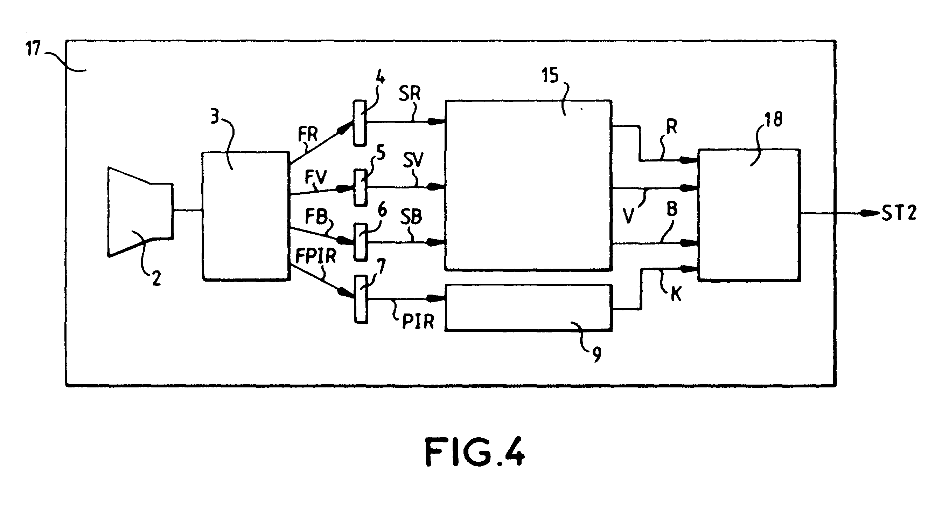

La figure 4 décrit un quatrième mode de réalisation de l'invention pour lequel le signal vidéo constitué des signaux de couleur R, V, B et le signal de clé K sortent de la caméra par une seule sortie de façon à constituer le signal ST2.

La caméra 17 comprend un objectif 2, un séparateur optique 3, quatre senseurs 4, 5, 6, 7 et deux circuits de traitement 15 et 9, tels que ceux mentionnés précédemment. Un dispositif de multiplexage et de modulation 18 permet de générer un seul signal de sortie ST2. Le signal de sortie ST2 issu de la caméra peut alors être transmis, par exemple, vers un studio de télévision ou un car de reportages par l'intermédiaire d'un câble unique.

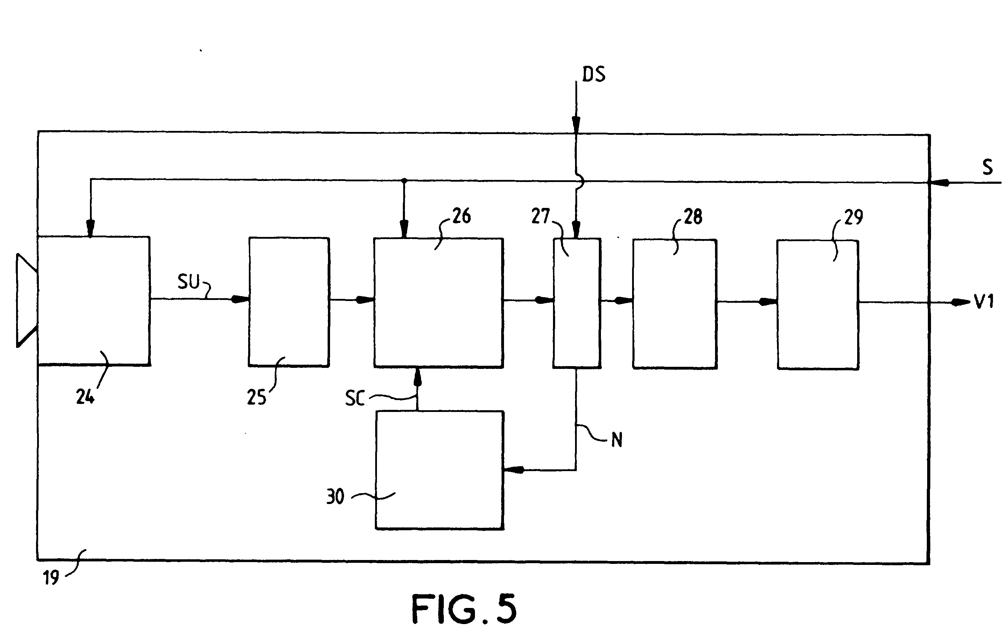

La figure 5 représente le schéma de principe d'une tête de caméra issue d'un perfectionnement de la tête de caméra représentée en figure 2 ou 4.

L'ensemble des circuits numérotés 2, 3, 4, 5, 6, 7, 8 et 9 sur la figure 2 ou 2, 3, 4, 5, 6, 7, 15 et 9 sur la figure 4 sont ici contenus dans un bloc unique référencé 24, lequel comprend aussi un circuit de multiplexage, non représenté sur la figure 5, de façon que les signaux issus des éléments respectifs 8 et 9, ou 15 et 9 constituent un signal multiplexé unique SU.

Selon le mode de réalisation de la figure 5, la caméra 19 comprend, en plus du dispositif de traitement 24, une zone de mémoire vidéo 25, un compresseur 26, une mémoire tampon 27, un circuit d'embrouillage 28, un circuit de modulation 29 et un circuit de régulation 30.

Le dispositif de traitement 24, la zone de mémoire vidéo 25, le compresseur 26, la mémoire tampon 27, le circuit d'embrouillage 28 et le circuit de modulation 29 sont disposés en série. Le sous-ensemble constitué par la zone de mémoire vidéo 25, le compresseur 26, la mémoire tampon 27 et le circuit de régulation 30 constituent un système permettant d'assurer un débit constant des données issues du dispositif de traitement 24.

Le signal multiplexé SU issu du dispositif de traitement 24 est constitué du signal vidéo représentant le sujet devant le fond et du signal de clé. Préférentiellement, le signal SU est un signal numérisé constitué soit des composantes Y, CB, CR, K au format 4:2:2:4 codées sur 10 bits, soit des composantes R, V, B, K au format 4:4:4:4 codées sur 10 bits.

L'information issue du dispositif de traitement 24 est écrite dans la zone de mémoire vidéo 25 ligne par ligne. La zone de mémoire vidéo 25 est, par exemple, une mémoire de type RAM à double accès.

La zone de mémoire vidéo 25, le circuit de compression 26 et la mémoire tampon 27 comprennent chacun une entrée vidéo et une sortie vidéo. La mémore tampon 27 comprend également une entrée de signaux auxiliaires et une sortie de commande. Le circuit de compression 26 comprend également une entrée de commande de compression et, préférentiellement, une entrée de commande de synchronisation. Le circuit de régulation 30 comprend une entrée de commande et une sortie de commande.

La sortie vidéo de la zone de mémoire vidéo 25 est reliée à l'entrée vidéo du compresseur 26 et la sortie vidéo du compresseur 26 est reliée à l'entrée vidéo de la mémoire tampon 27. La sortie de commande de la mémoire tampon 27 est reliée à l'entrée de commande du circuit de régulation 30 et la sortie de commande du circuit de régulation 30 est reliée à l'entrée de commande de compression du circuit de compression 26.

Selon le mode de réalisation préférentiel de l'invention, la compression effectuée par le circuit 26 est de mode JPEG et le nombre de lignes accumulées dans la zone de mémoire vidéo 25 est au minimum égal à 8. De façon plus générale, cependant, le mode de compression peut être différent du mode JPEG. Il peut s'agir, par exemple, de l'un quelconque des modes MPEG et, plus particulièrement, des modes MPEG à temps de traitement réduit tel que ,par exemple , le mode référencé MPEG-2 4:2:2 Profile Main Level (422@ ML ). Il est alors possible de travailler quasiment en temps réel .

Selon le mode de réalisation préférentiel, dès que le nombre de lignes accumulées dans la zone de mémoire vidéo 25 atteint, par exemple, la valeur 8, le signal de commande SC issu de la sortie de commande du circuit de régulation 30 est appliqué au compresseur 26 de façon à déclencher la compression. De façon connue en soi, l'image est alors décomposée en blocs d'image de 8x8 échantillons correspondant à 8 points d'images de 81 ignes successives. Chaque bloc d'image subit, par exemple, une transformée Cosinus discrète pour fournir des blocs transformés de 64 coefficients. Ces coefficients sont alors quantifiés selon des caractéristiques psycho-visuelles à l'aide de tables d'arrondi.

Selon le mode de réalisation préférentiel de l'invention, la quantification effectuée à l'aide de tables d'arondi prend la durée d'une trame d'image, soit 20ms. De façon plus générale, l'invention concerne également les cas où la quantification prend la durée d'un nombre entier de fois la durée d'une trame d'image. Les données comprimées reçues du compressuer 26 sont envoyées dans une mémoire tampon 27. La mémoire tampon 27 est, par exemple, une mémoire de type RAM double accès ou encore une mémoire de type FIFO. La mémoire tampon 27 comprend un circuit de comptage, non représenté sur la figure 1. Le circuit de comptage a pour fonction de compter le nombre de fois N qu'il a été écit dans la mémoire tampon 27 pendant la durée de l'opération de quantification, soit préférentiellement la durée d'une trame d'image (20ms). La grandeur N issu du circuit de comptage est appliquée à un circuit de comparaison, non représenté sur la figure, et situé en entrée du circuit de régulation 30. Le circuit de comparaison compare la valeur N a deux valeurs de seuil. Si N est supérieur à une première valeur de seuil, l'information issue du circuit de comparaison commande le circuit de régulation 30 de façon à accentuer le taux de compression. Si N est inférieur à une deuxième valeur de seuil de valeur inférieure à la première valeur de seuil, l'information issue du circuit de comparaison commande le circuit de régulation 30 de façon à diminuer le taux de compression. Lorsque N est compris entre les deux valeurs de seuil, le taux de compression reste inchangé.

A titre d'exemple, selon le mode de réalisation préférentiel, la première valeur de seuil correspond à 90% du nombre maximum de données qu'il est possible d'envoyer sur la ligne entre deux trames successives et la deuxième valeur de seuil correspond à 80% du nombre maximum de données qu'il est possible d'envoyer sur la ligne entre deux trames successives. Il s'ensuit que la compression des données n'est pas modifiée pour une valeur de N comprise entre 80% et 90% du nombre maximum de données qu'il est possible d'envoyer sur la ligne entre deux trames successives.

Selon une amélioration de l'invention, les processus d'augmentation et de diminution du taux de compression sont optimisés par la possibilité prévue de modifier la valeur des premier et deuxième seuils en prenant en compte l'évolution de la valeur de N elle-même.

Une telle possibilité peut être avantageusement envisagée lorsque la valeur de N varie souvent et dans des proportions non négligeables. Pour de forts accroissements de N, la valeur du premier seuil est alors diminuée et pour de fortes diminutions de N, la valeur du deuxième seuil est alors augmentée.

De façon préférentielle, le circuit de régulation 30 comprend un microprocesseur. La gestion de l'accroissement et de la diminution du taux de compression est alors effectuée par programmation.

A la mise en route, l'ensemble constitué par le compresseur 26, la mémoire tampon 27 et le circuit de régulation 30 démarre de façon à assurer un taux de compression élevé, tel que, par exemple, un taux de compression égal à 15, afin de ne pas risquer de saturer la transmission du signal. Après la mise en route, le circuit de régulation 30 asservit le taux de compression au contenu de l'image en fonction de la valeur de N. La durée de référence pour effectuer l'analyse qui conduit à l'asservissement des données comprimées est préférentiellement égal à la durée d'une trame, soit 20 ms.

Selon un perfectionnement de l'invention, un signal de synchronisation S est appliqué au dispositif d'analyse et de traitement 24 et au compresseur 26 de façon à caler en phase, par rapport à une référence de phase extérieure non représentée sur la figure 5, les données générées par ces circuits, permettant ainsi de réduire au maximum le délai de transmission des données.

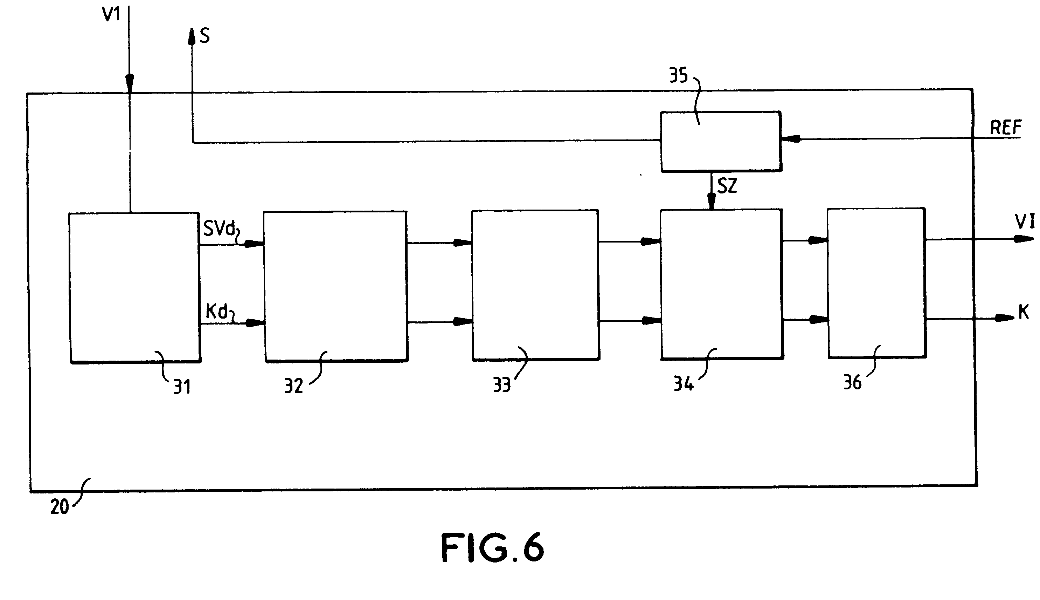

De façon plus générale, il faut noter que tous les circuits représentés aux figures 5 et 6 sont soumis, de façon connue en soi, à différents signaux de synchronisation et à différents signaux d'horloge qui ne sont pas représentés sur ces figures afin de ne pas alourdir les dessins.

Selon le mode de réalisation préférentiel de l'invention, le compresseur 26 fait appel à un codage connu de l'homme de l'art sous le nom de codage à longueur variable. Il est alors possible de réduire la taille des mots à forte probabilité. Préférentiellement, le compresseur 30 comprend un circuit de correction d'erreurs. Le signal issu de la mémoire tampon 27 est envoyé dans un embrouilleur 28 dont la fonction est de répartir de façon équiprobable la valeur des mots à transmettre et le signal issu de l'embrouilleur 28 est lui-même envoyé dans un modulateur numérique 29.

Différents types de modulation numérique peuvent être utilisés. La modulation d'amplitude classique (MA), la modulation d'amplitude à bande latérale unique (BLU) ou atténuée (BLA), la modulation d'amplitude en quadrature (MAQ) ou encore la modulation de phase multi-états (PSK). De façon plus générale, le modulateur numérique 29 selon l'invention concerne tout type de modulation à grande efficacité spectrale pour transmettre l'information sur un support à bande passante limitée.

Le modulateur numérique 29 comprend un dispositif de filtrage adapté de la bande de base avant modulation, tel qu'un filtre de Nyquist ou un filtre Gaussien. La porteuse est synchronisée au rythme des données élémentaires transmises.

Selon l'invention, le signal V1 issu de la caméra 19 peut contenir des données autres que celles issues de la détection du signal lumineux L. Comme représenté en figure 5, des données de service DS, telles que des paramètres propres à la caméra ou encore des données de prise de son numérique, peuvent être introduites dans la mémoire tampon 27 de façon à pouvoir transiter par la même voie que le signal vidéo. Ces données de service DS sont introduites dans la mémoire tampon 27 par l'intermédiaire de l'entrée de signaux auxiliaires mentionnée précédemment.

La figure 6 représente le schéma de principe d'une unité de contrôle permettant de traiter le signal vidéo issu d'une caméra telle que celle représentée en figure 5.

L'unité de contrôle 20 comprend, en série, un démodulateur/démultiplexeur 31, un désembrouilleur 32, un décompresseur 33, et une zone de mémoire vidéo 34 et un interface de sortie vidéo 36. Préférentiellement, l'unité de contrôle 20 comprend aussi un dispositif de synchronisation 35 qui génère, sous l'action d'une référence temporelle extérieure REF, un signal de synchronisation SZ appliqué à la zone de mémoire 34 ainsi que le signal S appliqué à la caméra décrite à la figure 6.

Le signal SZ permet avantageusement de synchroniser le signal vidéo SV issu de l'unité de contrôle avec d'autres signaux vidéo, eux-mêmes synchronisés par rapport à la référence REF. Une telle référence REF s'avère opportune dans le cas où plusieurs sources de signaux vidéo sont utilisées simultanément. Le démodulateur/démultiplexeur 31 a pour fonction de démoduler et de démultiplexer le signal V1 qu'il reçoit de façon à générer un signal vidéo Svd et un signal de clé Kd démodulés. Le désembrouilleur 32 et le décompresseur 33 effectuent, respectivement, les opérations inverses des opérations effectuées par l'embrouilleur 28 et le compresseur 26. De même que la zone de mémoire vidéo 25, la zone de mémoire vidéo 34 est adaptée au mode de compression choisi. A titre d'exemple, la zone de mémoire vidéo 34 est une mémoire de type RAM à double accès qui, dans le cas d'une compression de mode JPEG, accumule un nombre de lignes égal au minimum à 8.

Le signal issu de la zone de mémoire vidéo 34 est envoyé dans l'interface de sortie vidéo 36 dont la fonction est de mettre l'information vidéo issu de l'unité de contrôle au standard désiré. A titre d'exemple, l'interface de sortie vidéo 36 peut être un sérialiseur permettant de transformer les données numériques parallèles issues de la zone de mémoire vidéo 34 en données série, ou encore un convertisseur numérique analogique permettant de transformer les données numériques issues de la zone de mémoire vidéo 34 en signal analogique dont le standard peut être , à titre d'exemples, le standard PAL, SECAM ou NTSC. Selon le mode de réalisation représenté en figure 6, le signal de clé est lui aussi envoyé dans l'interface de sortie vidéo 36 de façon à être mis au même standard que le signal vidéo. Selon d'autres modes de réalisation, cependant, le signal de clé n'est pas mis au même standard que le signal vidéo et sort de l'unité de contrôle 20 sans passer par l'interface 36.

Selon un perfectionnement du mode de réalisation préférentiel de l'invention, il est avantageusement prévu que, lorsque N atteint, voire dépasse, le nombre maximum de données qu'il est possible d'envoyer sur la ligne entre deux trames successives, la zone de mémoire vidéo 34 restitue la même trame vidéo jusqu'à ce que soient rétablies des conditions normales de fonctionnement. Avantageusement, la continuité du signal vidéo est alors assurée en sortie de l'unité de contrôle. Afin de rétablir des conditions de fonctionnement normales, des taux de compression élevés, tels que ceux appliqués au démarrage, sont appliqués au compresseur 4.

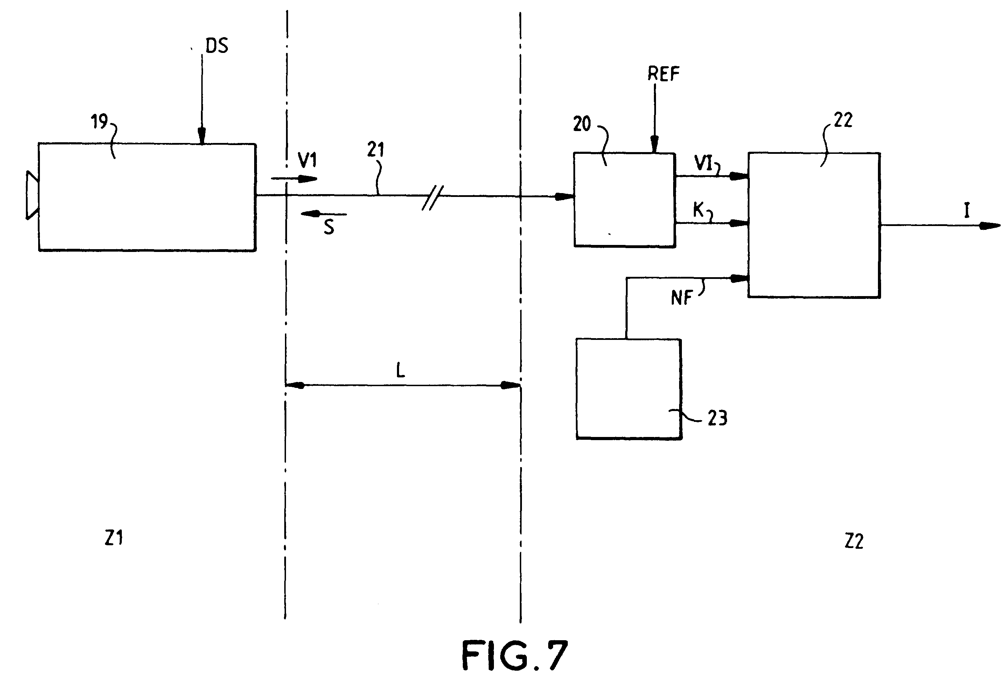

La figure 7 représente un système complet d'incrustation de sujet utilisant une caméra telle que celle représentée en figure 5 et une unité de contrôle telle que celle représentée en figure 6.

Outre la caméra 19 et l'unité de contrôle 20, un tel système comprend une ligne de transmission 21 permettant de relier la caméra à l'unité de contrôle, un dispositif 23 générant le signal vidéo représentant le nouveau fond NF sur lequel doit être incrusté le sujet et un mélangeur 22 dont la fonction est de générer l'image vidéo I représentant le sujet évoluant devant le nouveau fond.

La caméra 19 est située dans une première zone Z1 où est filmé le sujet évoluant devant le fond. L'unité de contrôle 20, le dispositif 23 et le mélangeur 22 sont situés dans une dexième zone Z2. Les zones Z1 et Z2 peuvent être dans le même studio de télévision mais elles peuvent aussi être géographiquement séparées de telle sorte que, par exemple, la zone Z2 soit dans un studio de télévision différent au studio de télévison où est filmé le sujet évoluant devant le fond ou encore dans un car de reportage éloigné de la caméra. Les zones Z1 et Z2 sont séparées par une distance L.

L'unité de contrôle 20 permet le démultiplexage et la démodulation des signaux qu'elle reçoit. Dans le cas où la caméra est telle que celle décrite en figure 4, l'unité de contrôle comprend des circuits permettant de convertir en signaux de luminance Y, de différence de couleur bleue CB et de différence de couleur rouge CR, les signaux de couleur qu'elle reçoit.

De façon générale, l'unité de contrôle 20 génère un signal vidéo VI représentant le sujet évoluant devant le fond et le signal de clé K.

Le signal vidéo VI, le signal de clé K, et le signal vidéo NF représentant le nouveau fond sur lequel doit être incrusté le sujet sont envoyés dans le mélangeur 22 qui a pour fonction de générer l'image vidéo I représentant le sujet évoluant devant le nouveau fond.

Selon le mode de réalisation décrit en figure 7, la transmission entre la caméra 19 et l'unité de contrôle 20 s'effectue par une ligne de transmission unique de structure classique 21, telle qu'un câble coaxial ou triaxial, une paire torsadée ou une ligne bifilaire. Avantageusement, la longueur L de la ligne de transmission peut varier de quelques centimètres à plusieurs kilomètres. A titre d'exemple, la ligne de transmission peut ainsi atteindre jusqu'à trois kilomètres.

Comme cela apparaît en figure 7, de façon préférentielle, le signal vidéo V1 et le signal de synchronisation S sont véhiculés sur le même câble.

Selon un autre mode de réalisation, la transmission entre la caméra et l'unité de contrôle est réalisée par voie hertzienne.

Selon le mode de réalisation préférentiel de l'invention décrit ci-dessus, la définition de la clé de découpe s'applique à une caméra.

L'invention concerne cependant tout type d'appareil électronique mettant en oeuvre la définition de la clé de découpe selon l'invention.

Ainsi l'invention concerne-t-elle aussi les dispositifs autonomes de découpe communément appelés "chroma-keyers". Avantageusement, de tels dispositifs ne comprennent alors plus les circuits complexes qui sont nécessaires, selon l'art antérieur, au calcul de la clé de découpe.

## Revendications

1. Caméra permettant de générer un signal vidéo (S1) représentant un sujet évoluant devant un fond, le sujet et le fond étant éclairés simultanément par un faisceau d'ondes de fréquences visibles et par un faisceau d'ondes de fréquences non visibles, caractérisée en ce qu'elle comprend des moyens (3, 7, 9) pour générer un signal de clé de découpe (K) dudit sujet à partir du faisceau d'ondes de fréquences non visibles, lesdits moyens (3, 7, 9) étant constitués d'un séparateur optique (3) permettant de séparer le faisceau qui représente le sujet et le fond devant lequel évolue le sujet en quatre faisceaux distincts, un faisceau de lumière rouge (FR), un faisceau de lumière verte (FV), un faisceau de lumière bleue (FB) et un faisceau constitué desdites fréquences non visibles, quatre dispositifs de détection (4, 5, 6, 7) permettant de transformer l'énergie lumineuse qu'ils reçoivent en signal électrique, chaque dispositif de détection étant associé à un faisceau différent parmi les quatre faisceaux, un premier circuit de traitement (8, 15) destiné à traiter les signaux électriques (SR, SV, SB) issus des trois détecteurs (4, 5, 6) permettant de transformer l'énergie lumineuse des faisceaux de lumière bleue (FB), rouge (FR) et verte (FV) en informations électriques de couleur (Y, CB, CR, R, V, B), et un deuxième circuit de traitement (9) permettant de transformer le signal électrique (PIR) issu du détecteur (7) associé au faisceau de fréquences non visibles (FPIR) en signal de clé de découpe (K).

2. Caméra selon la revendication 1, caractérisée en ce qu'elle comprend un dispositif (10) de multiplexage et de modulation de façon à créer un signal vidéo (S1) à partir des informations électriques de couleur (Y, CB, CR, R, B, V) issues du premier circuit de traitement (8, 15) et un dispositif de modulation (12) de façon à créer un signal de clé modulé (Km) à partir du signal de clé de découpe (K).

3. Caméra selon la revendication 1, caractérisée en ce qu'elle comprend un dispositif (13) de multiplexage et de modulation de façon à créer un signal (ST1) constitué par les informations multiplexées et modulées issues des premier (8) et deuxième (9) circuits de traitement.

4. Caméra selon l'une quelconque des revendications 2 ou 3, caractérisée en ce que le premier circuit de traitement (8) comprend des moyens pour que les informations électriques de couleur issues dudit premier circuit de traitement (8) soient les informations de luminance (Y), de différence de couleur bleue (CB), et de différence de couleur rouge (CR) associées au faisceau qui représente le sujet et le fond devant lequel évolue le sujet.

5. Caméra selon la revendication 4, caractérisée en ce que le premier circuit de traitement (8) comprend des moyens pour que les informations de luminance (Y), de différence de couleur bleue (CB) et de différence de couleur rouge (CR) soient des informations numériques au format 4:2:2.

6. Caméra selon l'une quelconque des revendications 2 ou 3, caractérisée en ce que le premier circuit de traitement (15) comprend des moyens pour que les informations électriques de couleur issues dudit premier circuit de traitement (15) soient constituées des trois signaux primaires rouge (R), vert (V) et bleu (B) associés au faisceau qui représente le sujet et le fond devant lequel évolue le sujet.

7. Caméra selon la revendication 6, caractérisée en ce que le premier circuit de traitement (15) comprend des moyens pour que les trois signaux primaires rouge (R), vert (V) et bleu (B) soient des signaux numériques au format 4:4:4.

8. Caméra selon la revendication 5 ou 6, caractérisée en ce que les informations numériques sont codées sur 10 bits.

9. Caméra selon l'une quelconque des revendications 1 à 8, caractérisée en ce que le deuxième circuit de traitement (9) comprend des moyens d'échantillonnage du signal électrique (PIR) issu du détecteur (7) associé au faisceau de fréquences non visibles et des moyens de comparaison à un seuil du signal issu desdits moyens d'échantillonnage de façon que le signal de clé (K) prenne une première valeur signifiant que le fond n'est pas détecté quand le niveau du signal électrique échantillonné est inférieur à la valeur de seuil et une deuxième valeur signifiant que le fond est détecté quand le niveau du signal électrique échantillonné est supérieur à la valeur de seuil.

10. Caméra selon la revendication 9, caractérisée en ce que le deuxième circuit de traitement (9) comprend un convertisseur analogique-numérique permettant de numériser le signal issu des moyens de comparaison.

11. Caméra selon l'une quelconque des revendications 1 à 10, caractérisée en ce que le dispositif de détection (7) du faisceau constitué des fréquences non visibles est un dispositif à transfert de charges communément utilisé pour détecter des fréquences visibles, les fréquences non visibles détectées étant alors situées dans la bande de fréquence proche infrarouge.

12. Caméra selon l'une quelconque des revendications 1 à 11, caractérisée en ce qu'un filtre ne laissant pas passer les fréquences visibles, et que les fréquences non-visibles issues du fond est placé en amont du séparateur optique (3).

13. Système permettant l'incrustation sur un deuxième fond d'un sujet évoluant devant un premier fond, caractérisé en ce qu'il comprend une caméra selon la revendication 1 de façon à générer le signal vidéo représentant le sujet évoluant devant le premier fond et le signal de clé de découpe (K), un dispositif (23) générant le signal vidéo (NF) représentant le deuxième fond et un mélangeur (22) permettant de générer l'image (I) représentant le sujet incrusté sur le deuxième fond à partir du signal vidéo (VI) représentant le sujet évoluant devant le premier fond, du signal de clé de découpe (K), et du signal vidéo (NF) représentant le deuxième fond.

14. Système permettant l'incrustation sur un deuxième fond d'un sujet évoluant devant un premier fond, caractérisé en ce qu'il comprend une caméra (19) selon la revendication 1 de façon à générer le signal vidéo représentant le sujet évoluant devant le premier fond et le signal de clé de découpe, ladite caméra comprenant un circuit de multiplexage dudit signal vidéo et dudit signal de clé de découpe de façon à créer un signal multiplexé (V1) issu de la caméra, une unité de contrôle (20) contenant un démultiplexeur, une ligne de transmission (21) permettant d'acheminer ledit signal multiplexé vers ledit démultiplexeur afin de restituer d'une part, le signal vidéo (VI) représentant le sujet évoluant devant le premier fond et, d'autre part, le signal de clé de découpe (K), un dispositif (23) générant le signal vidéo (NF) représentant le deuxième fond, et un mélangeur (28) permettant de générer l'image (I) représentant le sujet incrusté sur le deuxième fond à partir du signal vidéo (VI) issu de l'unité de contrôle (20), du signal de clé (K) issu de l'unité de contrôle (20) et du signal vidéo (NF) représentant le deuxième fond.

15. Système selon la revendication 14, caractérisé en ce que lesdits premier (8) et deuxième (9) circuits de traitement contenus dans la caméra comprennent des circuits permettant de numériser l'information qu'ils traitent de façon à constituer en sortie du circuit de multiplexage des données numériques, en ce que la caméra comprend un sous-ensemble (25, 26, 27, 28) permettant de comprimer lesdites données numériques et d'assurer un débit sensiblement constant desdites données et en ce que l'unité de contrôle comprend un sous-ensemble (33, 34) permettant de décompresser les données numériques issues du démultiplexeur et de restituer, d'une part, un signal vidéo représentant l'image du sujet devant le premier fond (VI) et, d'autre part, le signal de clé de découpe (K).

16. Système selon la revendication 15, caractérisé en ce que la caméra comprend un embrouilleur (28) et un modulateur numérique (29) montés en série, l'embrouilleur (28) permettant d'embrouiller les données numériques issues du sous-ensemble (25, 26, 27, 28) contenu dans la caméra, et en ce que l'unité de contrôle (20, 21) comprend un démodulateur (31) et un désembrouilleur (32) montés en série, la sortie du désembrouilleur (32) étant reliée à l'entrée du sous-ensemble contenu dans l'unité de contrôle.

17. Système selon la revendication 16, caractérisé en ce que le sous-ensemble (25, 26, 27, 28) contenu dans la caméra comprend une zone de mémoire vidéo (25) comprenant une entrée vidéo et une sortie vidéo, un compresseur (26) comprenant une entrée vidéo, une sortie vidéo et une entrée de commande, une mémoire tampon (27) comprenant une entrée vidéo, une sortie vidéo et une sortie de commande, ladite mémoire tampon (27) comprenant des moyens pour générer par ladite sortie de commande une information (INF) permettant de commander le taux de compression du compresseur (26), un circuit de régulation (30) ayant une entrée de commande et une sortie de commande, la sortie vidéo de la zone de mémoire vidéo (25) étant reliée à l'entrée vidéo du compresseur (26), la sortie vidéo du compresseur (26) étant reliée à l'entrée vidéo de la mémoire tampon (28), la sortie de commande de la mémoire tampon (28) étant reliée à l'entrée de commande du circuit de régulation (30) et la sortie de commande du circuit de régulation (30) étant reliée à l'entrée de commande du compresseur (26), et en ce que le sous-ensemble (33, 34) contenu dans l'unité de contrôle (20) comprend un décompresseur (33) comprenant une entrée et une sortie, et une zone de mémoire vidéo (34) comprenant une entrée et une sortie, la sortie du décompresseur (33) étant reliée à l'entrée de la zone de mémoire vidéo (34).

18. Système selon la revendication 17, caractérisé en ce que la zone de mémoire vidéo (25) contenue dans la caméra comprend une mémoire dans laquelle les données numériques issues du circuit de multiplexage sont écrites ligne par ligne, le nombre de lignes accumulées dans la zone de mémoire vidéo (35) contenu dans la caméra étant au minimum égal à 8, en ce que le compresseur (26) comprend des circuits travaillant en mode JPEG, en ce que lesdits moyens pour générer ladite information (INF) sont constitués d'un circuit de comptage et d'un circuit de comparaison, ledit circuit de comptage permettant de compter le nombre de fois (N) qu'il a été écrit dans ladite mémoire tampon (28) pendant la durée d'une trame du signal vidéo, le circuit de comparaison permettant de comparer ledit nombre de fois (N) ) à une valeur de seuil de façon que si ledit nombre de fois (N) est supérieur à ladite valeur de seuil, ladite information (INF) commande le circuit de régulation (30) de façon à accentuer le taux de compression ou, si le nombre de fois (N) est inférieur à ladite valeur de seuil, ladite information (INF) commande le circuit de régulation (30) de façon à diminuer le taux de compression, en ce que le décompresseur (33) comprend des circuits travaillant selon le mode JPEG pour décompresser le signal vidéo recueilli sur son entrée, et en ce que la zone de mémoire vidéo (34) de l'unité de contrôle comprend des moyens pour stocker un nombre de lignes égal au minimum à 8 et pour restituer l'image vidéo désirée à partir des données recueillies sur son entrée.

19. Système selon la revendication 18, caractérisé en ce que l'unité de contrôle (20) comprend un dispositif de synchronisation (35) permettant de générer sous l'action d'une référence temporelle extérieure (REF) un signal de synchronisation (SZ) appliqué à la zone de mémoire vidéo (34) de l'unité de contrôle de façon à synchroniser le signal issu de l'unité de contrôle (20) avec d'autres signaux vidéo eux-mêmes synchronisés par rapport à la référence temporelle extérieure (REF).

20. Système selon l'une quelconque des revendications 14 à 19, caractérisé en ce que la ligne de transmission (21) est une ligne triaxiale.

21. Système selon l'une quelconque des revendications 14 à 19, caractérisé en ce que la ligne de transmission (21) est une ligne coaxiale.

22. Système selon l'une quelconque des revendications 14 à 19, caractérisé en ce que la ligne de transmission (21) est une ligne bifilaire.

23. Système selon l'une quelconque des revendications 20 à 22, caractérisé en ce que la ligne de transmission (21) a une longueur sensiblement comprise entre quelques centimères et trois kilomètres.
